(19) Europäisches Patentamt
European Patent Office
Office européen des brevets

(11) **EP 2 522 851 A2**

(12) **EUROPÄISCHE PATENTANMELDUNG**

(43) Veröffentlichungstag:
**14.11.2012   Patentblatt 2012/46**

(51) Int Cl.:
***F03D 7/02*** *(2006.01)*        ***F03D 7/04*** *(2006.01)*

(21) Anmeldenummer: **12002862.6**

(22) Anmeldetag: **24.04.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **10.05.2011   DE 102011100981**

(71) Anmelder: **Robert Bosch GmbH**
**70469 Stuttgart (DE)**

(72) Erfinder: **Paweletz, Anton**
**70736 Fellbach (DE)**

(74) Vertreter: **Thürer, Andreas**
**c/o Bosch Rexroth AG**
**Zum Eisengiesser 1**
**97816 Lohr am Main (DE)**

(54) **Betriebsverfahren für eine Windenergieanlage**

(57)     Die Erfindung ermöglicht eine Optimierung des Betriebes einer Windenergieanlage in Echtzeit. Dem vorgeschlagenen Verfahren liegt die Erkenntnis zugrunde, dass die Zeitkonstanten der (elektro)mechanischen Komponenten (Rotor, Getriebe, Wellen etc.) einer Windenergieanlage bedeutend größer sind als die Zeitkonstanten der elektromagnetischen Komponenten (Generator, die diesem zugeordnete Leistungselektronik, einen Umrichter, Transformator etc.). Die Vorgabe bzw. Regelung der mechanischen Zustandsgrößen ([V_PC], [V_Wind], [V_Mech], [V_Getr]) kann daher in relativ großen zeitlichen Abständen erfolgen, bspw. im Bereich einiger 100 ms, wobei währenddessen eine Anzahl von Zustandsvektoren ([[V_Gen], [V_Gl], [V_Inv], [V_L], [V_Tr], [V_Nz], [V_PC], [V_Wind], [V_Mech], [V_Getr]]) simuliert werden kann. Der Zustandsvektor, der den erwünschten Bedingungen genügt, bspw. die geringste Verlustleistung verspricht, wird dann zum nächsten Zeitpunkt (d.h. nach dem zeitlichen Abstand) als neuer Soll-Zustandsvektor vorgegeben. Die zu simulierenden Zustandsvektoren definieren sich zumindest durch unterschiedliche elektromagnetische Zustandsgrößen ([V_Gen], [V_Gl], [V_Inv], [V_L], [V_Tr], [V_Nz]). Es ist bevorzugt, neben den elektromagnetischen Zustandsgrößen auch mechanische Zustandsgrößen ([V_PC], [V_Wind], [V_Mech], [V_Getr]) zu variieren.

Fig. 6

EP 2 522 851 A2

**Beschreibung**

Die vorliegende Erfindung betrifft ein Verfahren zum verlustarmen Betrieb einer Windenergieanlage sowie ein entsprechendes Steuerungs- bzw. Regelungssystem.

Stand der Technik

Die Leistungsfähigkeit moderner Windenergieanlagen (WEA) steht und fällt mit ihrer Antriebstechnik. Die Anforderungen dabei sind hoch: Variable Windlasten, steigende Anlagenleistungen und kompakte Bauweise sind neben klimatischen Schwankungen nur einige Besonderheiten, die bei der Konzeption entsprechender Anlagen berücksichtigt werden müssen.

Moderne Steuerungssysteme für Windenergieanlagen beinhalten je nach Anlagenkonzept Leit- und Automatisierungssysteme, die üblicherweise mittels Industrie-PCs und umfangreicher Anwendungssoftware gesteuert werden. Eine entsprechende Anwendungssoftware verarbeitet eine Reihe von Ein- und Ausgangssignalen. Nicht selten werden dabei mehr als 100 Ein- und Ausgangssignale von der Steuerung ausgewertet. Aufgrund der rauen Betriebsbedingungen bieten sich Flashlaufwerke als Massenspeicher an. Entsprechende Steuerungssysteme sind häufig offen ausgelegt und erlauben den Anschluss über alle handelsüblichen PC-Schnittstellen.

Realisiert werden offene Automatisierungssysteme auf Grundlage von PC-basierter Steuerungstechnik. Die Offenheit in Bezug auf die Software- und Hardwareschnittstellen ermöglicht es den Anlagenherstellern, ihre Systeme sowohl im Designentwurf als auch bei späteren Systemerweiterungen oder Modifikationen flexibel an die geänderten Anforderungen anzupassen.

Die Anforderungen steigen dabei aufgrund unterschiedlichster Netzeinspeisungsbedingungen sowie aufgrund sich erweiternder klimatische Einsatzbedingungen (z.B. Einsatz unter arktischen oder wüstenähnlichen Klimaverhältnissen) ständig. Die Hersteller von Windenergieanlagen stehen somit vor der Aufgabe, den permanent wechselnden Anforderungen mit maximaler Flexibilität zu begegnen und verstärkt durch flexible Software und Steuerungsverfahren den optimalen Betrieb der Windenergieanlage zu gewährleisten.

Vor allem die Datenbereitstellung und das Datenmanagement nehmen eine Schlüsselstellung bei der Überwachung und Bewertung des Betriebsverhaltens der Anlagen ein, und zwar sowohl vertikal (von der Maschine zur zentralen Steuerung) als auch horizontal (zwischen den einzelnen Baugruppen und Komponenten). Die Systeme werden dabei immer schneller: Sensorsignale können mit Abtastzeiten von weniger als 10 $\mu$s eingelesen werden. Mit entsprechenden Echtzeitsystemen, z.B. der sogenannten XFC-Technologie (eXtreme Fast Control Technology), ist eine zeitliche Auflösung von weniger als 100 ns möglich.

Ebenfalls ist bekannt, die Windturbine und das Antriebssystem vor der Inbetriebnahme simulativ mit ihren jeweiligen physikalischen Elementen abzubilden und bereits vor der Inbetriebnahme miteinander zu testen und aufeinander abzustimmen.

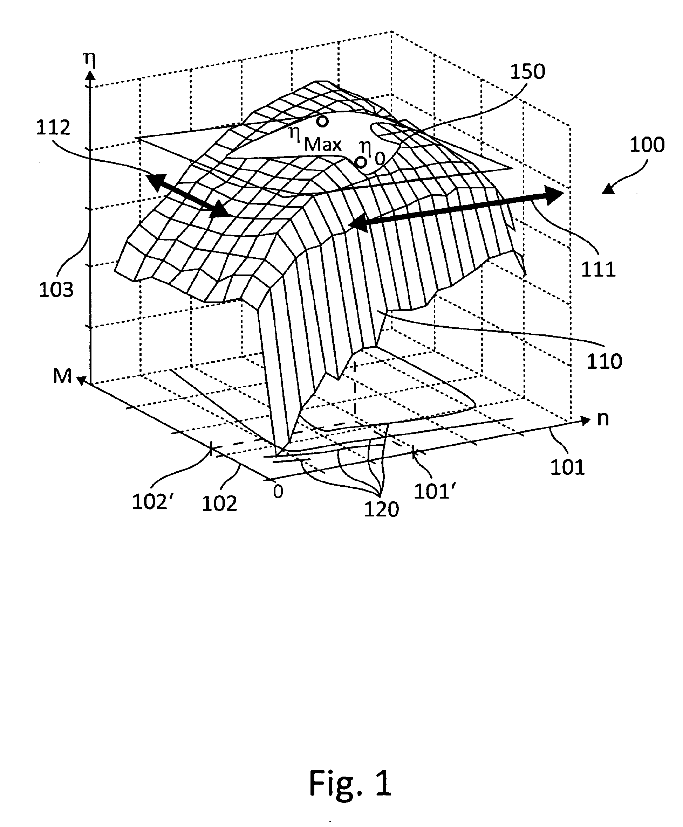

Windenergieanlagen werden - im Gegensatz beispielsweise zu Turbogeneratoren und Hydrogeneratoren - aufgrund der naturgemäß variablen Windlast mit variabler Drehzahl betrieben. Die Betriebspunkte der jeweiligen Komponenten im Antriebsstrang verändern sich dadurch kontinuierlich und weichen, wie in der unten näher erläuterten Figur 1 dargestellt, oft bedeutend vom jeweiligen Optimum des Wirkungsgrades ab.

Es wäre daher wünschenswert, ein Steuerungs- und/oder Regelungsverfahren für eine Windenergieanlage zur Verfügung zu haben, welches eine Vorgabe der Zustandsvektoren der mechanischen und elektrischen Elemente derart ermöglicht, dass das energetische Optimum bei der Gewinnung der verfügbaren Windenergie über die Zeit erreicht wird.

Offenbarung der Erfindung

Vor diesem Hintergrund schlägt die vorliegende Erfindung ein Verfahren zum verlustarmen Betrieb einer Windenergieanlage sowie ein entsprechendes Steuerungs- bzw. Regelungssystem mit den Merkmalen der unabhängigen Patentansprüche vor. Bevorzugte Ausgestaltungen sind Gegenstand der jeweiligen Unteransprüche sowie der nachfolgenden Beschreibung.

Vorteile der Erfindung

Die Erfindung ermöglicht eine Optimierung des Betriebes der Windenergieanlage in Echtzeit. Dem vorgeschlagenen Verfahren liegt die Erkenntnis zugrunde, dass die Zeitkonstanten der (elektro)mechanischen Komponenten (Rotor, Getriebe, Wellen etc.) einer Windenergieanlage bedeutend größer sind als die Zeitkonstanten der elektromagnetischen Komponenten (umfassend beispielsweise den Generator, die diesem zugeordnete Leistungselektronik, einen Umrichter, Transformator etc.). Die Vorgabe bzw. Regelung der mechanischen Zustandsgrößen (insbes. Generatordrehzahl, Pitchwinkel und Azimutwinkel) kann daher in relativ großen zeitlichen Abständen erfolgen, bspw. im Bereich einiger 100 ms, wobei währenddessen eine Anzahl von Zustandsvektoren simuliert werden kann. Der Zustandsvektor, der den erwünschten Bedingungen genügt, bspw. die geringste Verlustleistung verspricht, wird dann zum nächsten Zeitpunkt (d.h. nach dem zeitlichen Abstand) als neuer Soll-Zustandsvektor vorgegeben. Die zu simulierenden Zustandsvektoren definieren sich zumindest durch unterschiedliche elektromagnetische Zustandsgrößen (insbes. Generatorstrom, Zwischenkreisspannung, Zwischenkreisspeicherleistung, Leistungsfaktor cos □Speicherstrom, ...). Es ist bevorzugt, neben den elektromagnetischen Zustandsgrößen auch mechanische Zustandsgrößen zu variieren.

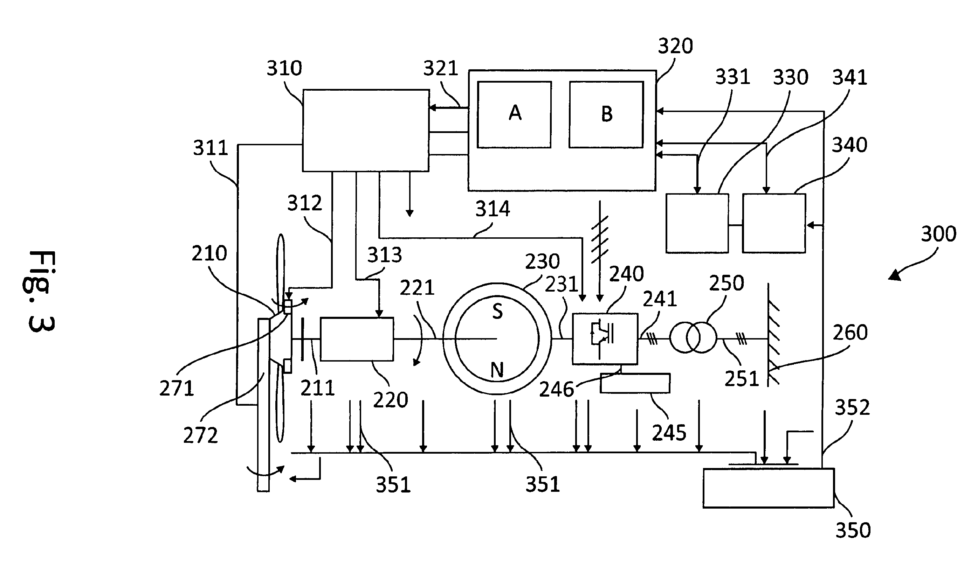

Die Erfindung beinhaltet eine hierarchische Anordnung und Aufteilung der Komponentenmodelle und der Steuerungsstruktur auf mindestens zwei Bereiche, nämlich in der Regel einen Bereich, der dem elektromechanischen System zugeordnet ist, und einen Bereich, der dem elektromagnetischen System zugeordnet ist. Die in den unten näher erläuterten Figuren 3, 4 und 5 schematisch dargestellte Anlage beinhaltet entsprechende mit A und B bezeichnete Strukturbereiche, wobei diese mit den anlagespezifisch bereitgestellten Modellen der Antriebskomponenten abgebildet sind.

Im Rahmen der vorliegenden Anmeldung wird der elektromagnetische Strukturbereich mit seinen Systemkomponenten, wie in den genannten Figuren angegeben, durchgängig als Strukturbereich bzw. Teilsystem A bezeichnet, der elektromechanische Strukturbereich hingegen als Strukturbereich bzw. Teilsystem B.

Das Gesamtsystem der Windenergieanlage wird also in mindestens zwei Teilsysteme aufgeteilt, wobei die Aufteilung dem Energiewandlungsverlauf im Antriebsstrang der Anlage entspricht, welcher, ausgehend von der Windenergie über die mechanische Energie letztlich zur elektrischen Energie, die in das elektrische Netz abgegeben wird, verläuft. Dabei können eventuell bereitgestellte (Zwischen-)Energiespeicher mitberücksichtigt werden.

Die Zeitkonstanten der Komponenten des elektromechanischen Strukturbereichs B sind sehr groß und ihre Eigenfrequenzen liegen im niedrigen Hz-Bereich und darunter. So verlaufen alle Änderungen (Ableitungen der relevanten Größen, wie der Windparameter und der mechanischen Zustandsgrößen, wie der jeweiligen mechanischen Winkel und der Drehzahl) in Teilsystem B bedeutend langsamer als jene im elektromagnetischen Teilsystem A. Sie verändern sich in einer elektrischen Periode der Netzspannung von 50 Hz unbedeutend. Alle Prozesse im elektromagnetischen Strukturbereich A verlaufen bedeutend schneller.

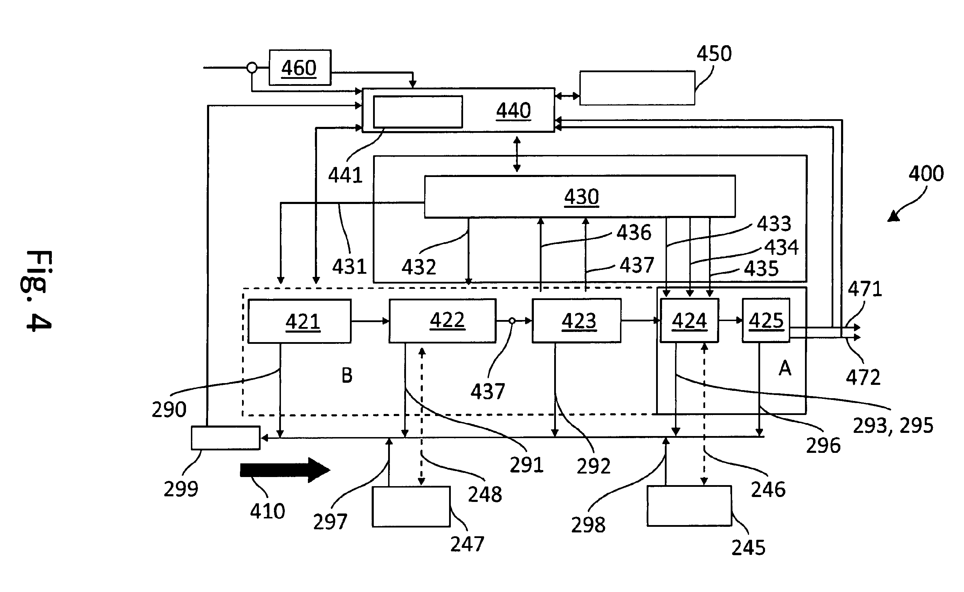

Die Zentraleinheit der Anlage (siehe z. B. Figuren 3 und 4) steuert jeweils wenigstens eine der Anlagenkomponenten - innerhalb der jeweiligen Strukturbereiche - an und regelt diese derart, dass die Gesamtverluste der Windenergieanlage bei gegebener Windleistung und unter Berücksichtigung einer elektrischen Wirkleistung P und einer Blindleistung Q des Generators möglichst minimal sind.

Die in der Zentraleinheit hinterlegten mathematischen Modelle werden mit mindestens zwei unterschiedlichen Integrationsschrittweiten simuliert, nämlich $\Delta tb$ für Teilsystem B - wie Wind und Mechanik - und $\Delta ta$ für Teilsystem A - also Generator, Leistungselektronik (Frequenzumrichter, Transformator) und Ansteuerung - wobei, wie erläutert, $\Delta tb \gg \Delta ta$. Die Integrationsschrittweiten der Teilsysteme A und B können (je nach den verwendenden numerischen Verfahren) als konstante Zeitvorgaben definiert oder, bspw. bereichsweise, variiert werden. Durch das Verhältnis der Zeitkonstanten in den Bereichen A und B können innerhalb eines Integrationsschritts (auch als Iterations- oder Simulationsschritt bezeichnet) des mechanisches Systems mehrere Optimierungsszenarien des elektrischen Systems berechnet und damit ein verlustarmer Betrieb bzw. ein Betrieb nahe am Optimum erreicht werden. Die Bestimmung des Verhaltens der Windenergieanlage läuft im Modell innerhalb des Simulationsschritts mit der Schrittweite $\Delta tb$ mehrmals mit dem Simulationsschritt mit der Schrittweite $\Delta ta$.

Erfindungsgemäß wird ein Betrieb nahe des Optimums beispielsweise unter Einbeziehung folgender Schritte realisiert:

● Die Verluste oder Wirkungsgrade werden im Vorfeld simulativ als Funktion eines für die Generatorart spezifischen Zustandsvektors (z.B. Pitchwinkel, Azimutwinkel, Generatorwerte, Transformatorwerte, Umrichterwerte; ein für den jeweiligen Zweck geeigneter Zustandsvektor wird vom Fachmann ausgewählt werden) als Berechnungsformeln und/oder in Form von mehrdimensionalen Kennfeldern (Look-up-Tables) dargestellt und im Speicher der Zentraleinheit abgelegt.

● Der den aktuellen Zustand beschreibende Zustandsvektor wird aus den laufenden Simulationen und unterstützt durch Messungen ermittelt.

● Die Teilsysteme A und B werden in einer gemeinsamen Simulation ("co-Simulation") gelöst.

● Modellbasierte Berechnungen der Teilverluste im Zeitpunkt $tb_k$ erfolgen in Form einer Echtzeitsimulation mit einer Simulationsschrittweite $\Delta tb$ (wobei sich b auf das oben erläuterte elektromechanische Teilsystem B bezieht).

● Während eines Simulationsschritts mit der Schrittweite $\Delta tb$ wird in der Zentraleinheit (Real Time Rechner) die interessierende Größe (bspw. Verlustleistung) mittels hinterlegter mathematischer Modelle und/oder Kennfelder mehrmals mit einer Simulationsschrittweite $\Delta ta$ (wobei sich a auf das oben erläuterte elektromagnetische Teilsystem A bezieht) für unterschiedliche Zustandsvektoren berechnet.

● Zum nachfolgenden Zeitpunkt $tb_{k+1}$ wird derjenige der simulierten Zustandsvektoren als neuer Soll-Zustandsvektor vorgegeben, für den die geringste Verlustleistung ermittelt worden ist.

Es kann vorgesehen sein, einen neuen Soll-Zustandsvektor mit nur veränderten elektromagnetischen Größen auch während des Simulationsschritts mit der Schrittweite $\Delta tb$ vorzugeben, wenn bei der Simulation ein lokales Optimum (d.h. ein besserer als der aktuelle Zustand) erreicht wird.

Die Simulation selbst bedient sich zweckmäßigerweise bekannter Optimierungsalgorithmen, z.B. basierend auf einem modellbasierten Optimierungsverfahren (z.B. heuristische numerische Lösungsverfahren für multivariate Optimierungsprobleme, wie z.B. genetische Algorithmen, evolutionäre Mehrzieloptimierung, Mehrzieloptimierung mit neuronalen Netzen und Evolutionsstrategien).

Bei multivariaten Optimierungsproblemen werden dabei zwei oder mehr Zielsetzungen abhängig von bestimmten Betriebsgrenzen gleichzeitig optimiert. Bei den wichtigsten Zielen handelt es sich hier um die maximale Wirkleistung $P$ am Ausgang der Windenergieanlage, minimale Gesamtverluste und die Beibehaltung einer vorgegebenen Blindleistung $Q$ am Ausgang der Anlage. Bei den wichtigsten Betriebsgrenzen handelt es sich hier um Temperaturlimits der Baugruppen und Komponenten der Windenergieanlage, wie Wicklungen, Magnete, Lager etc., die maximale Drehzahl der Turbine, Stromgrenzen im Generator und Frequenzumrichter, elektrische Spannungsgrenzen im Zwischenkreis des Frequenzumrichters, zusätzlich evtl. verbotene Resonanzbereiche der Drehzahl, Spannungs- und Stromgrenzen eines verwendeten Energiespeichers sowie mechanische Spannungen in Blättern, Fundament und Turm der Windenergieanlage.

Die Leistungsoptimierung erfolgt dabei auf Grundlage der an sich bekannten Zielfunktion zur Minimierung der Verlustleistung

$$\sum_i \Delta P_i = \text{Min}, \, i = 1 \ldots k,$$

$$\Delta P_i = \Delta W_i / \Delta t.$$

Hierbei bezeichnen:

$\Delta W_i$    den Verlustenergieanteil pro Simulationsschritt/Integrationsschritt (Teilsysteme A und B),

$\Delta t$    die Integrationsschrittweite für den jeweiligen Systembereich A, B ($\Delta ta$, $\Delta tb$),

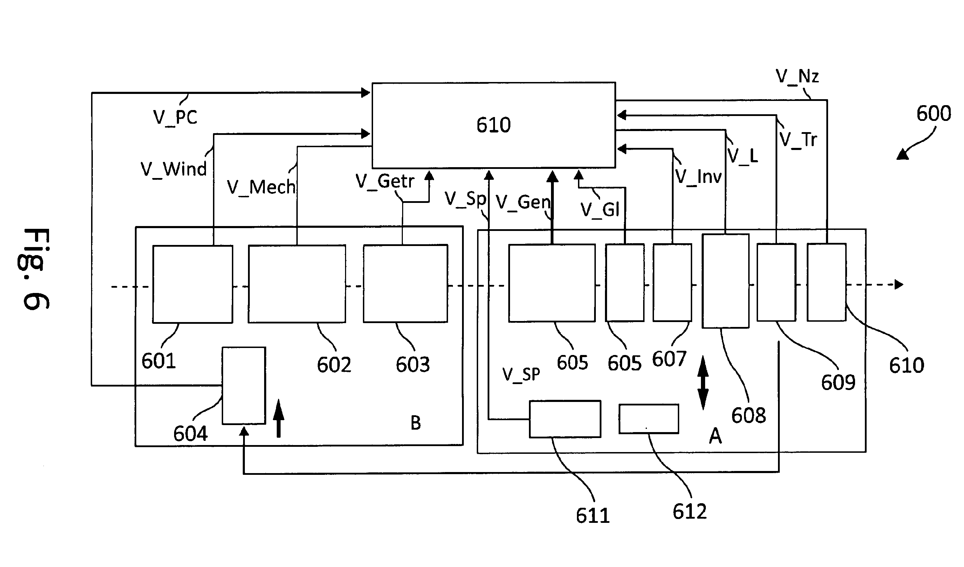

$\Delta P_i$    den Verlustleistungsanteil innerhalb von Komponente $i$ der Windenergieanlage, wie Welle(n), Lager, Getriebe, dem Generator (Eisen im Stator, Generatorwicklungen, Generatorlager, Eisen im Rotor), dem Pitchsystem etc.; zu Details siehe die unten erläuterte Figur 6), und

$k$    die Anzahl der berücksichtigten Komponenten.

Der ermittelte Soll-Zustandsvektor wird für den nächsten Ansteuerschritt der Anlage verwendet. Für die Sollwerte des Strukturbereichs B werden typischerweise ein Windmodell, ein aerodynamisches Modell, ein mechanisches Modell und ein Azimutwinkel verwendet.

Es bietet sich an, eine Reihe von Kennfeldern (Look-up-Tables) vorzubelegen, in denen eine benötigte Größe (insbes. Verlustleistung oder Wirkungsgrad) für unterschiedliche Zustandsvektoren und/oder in Abhängigkeit von einer oder mehreren Zustandsgrößen hinterlegt ist. Dies beschleunigt die Simulation erheblich. Die Komponentenverlustleistungen ($\Delta P_i$, wobei i den jeweiligen Komponentenindex angibt) der einzelnen Baugruppen und Komponenten im Antriebsstrang bzw. ihre Wirkungsgrade sind, wie beispielsweise unten in Figur 1 dargestellt, betriebspunktabhängig und bilden mehrdimensionale Funktionen in Abhängigkeit von den jeweiligen Zustandsgrößen. In der Regel haben die Wirkungsgrade ein ausgeprägtes Maximum (wie z.B. für Generator, Getriebe oder Transformator) und können besonders einfach in einem Kennfeld hinterlegt werden. Auch können durch den Einsatz von Kennfeldern besonders einfach die äußeren Bedingungen (Temperatur, Luftfeuchtigkeit usw.) und nach Bedarf auch die Veränderungen der Komponentenparameter (z.B. infolge von Verschleiß und Alterungserscheinungen) berücksichtigt werden. Derartige Parameter könnten zum Beispiel durch ein oder mehrere Zustandsüberwachungssysteme (Condition Monitoring Systems) ermittelt werden. Insgesamt wird hierdurch eine hochgenaue, spezifische Abbildung der einzelnen Komponenten der Windenergieanlage in einem entsprechenden Betriebsverfahren ermöglicht.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung

Figur 1    zeigt ein typisches Wirkungsgradkennfeld einer Komponente im Antriebstrang einer Windenergieanlage, die erfindungsgemäß betrieben werden kann.

Figur 2a    zeigt eine Windenergieanlage mit permanent erregtem Synchrongenerator in schematischer Darstellung, die erfindungsgemäß betrieben werden kann.

Figur 2b    zeigt Zustandsvariablen, Grenzen und Parameter in einer Windenergieanlage gemäß Figur 2a in schematischer Darstellung.

Figur 3    zeigt einen Antriebstrang einer Windkraftanlage, die erfindungsgemäß betrieben werden kann, und ein entsprechendes Modell in schematischer Darstellung.

Figur 4    zeigt schematisch die Aufteilung einer erfindungsgemäß betriebenen Windkraftanlage in zwei Teilsysteme mit unterschiedlichem dynamischem Verhalten gemäß einer besonders bevorzugten Ausführungsform der Erfindung.

Figur 5    zeigt schematisch eine Echtzeitsimulation einer Windkraftanlage gemäß einer besonders bevorzugten Ausführungsform der Erfindung.

Figur 6    zeigt schematisch ein Betriebsverfahren für eine Windenergieanlage gemäß einer besonders bevorzugten Ausführungsform der Erfindung.

In den nachfolgenden Figuren sind gleiche oder gleichartige Komponenten mit identischen Bezugszeichen angegeben. Auf eine wiederholte Erläuterung wird der Übersichtlichkeit halber verzichtet.

In der Figur 1 ist ein typisches Wirkungsgradkennfeld 110 einer Komponente einer Windenergieanlage in einem Diagramm 100 dargestellt. Im Diagramm 100 bezeichnen die Achsen 101, 102 und 103 eine Drehzahl n, ein Drehmoment M bzw. einen Wirkungsgrad $\eta$ der betrachteten Komponente. Mit den Pfeilen 111 und 112 sind entsprechend mögliche Änderungen im Betriebszyklus angegeben. Wirkungsgrad-Isolinien in der Ebene der Achsen 101 und 102 sind mit 120 angegeben. Das Wirkungsgradkennfeld ist zur besseren Veranschaulichung nur als Funktion zweier Variablen - Drehzahl und Drehmoment - dargestellt, in der Praxis beeinflusst eine Reihe weiterer Faktoren den Wirkungsgrad.

Der momentane Wirkungsgrad bei einer Drehzahl 101' und einem Drehmoment 102' mit $\eta_0$ bezeichnet. Die zugehörige Isolinie ist mit 150 bezeichnet. Der maximal erreichbare Wirkungsgrad ist mit $\eta_{Max}$ angegeben

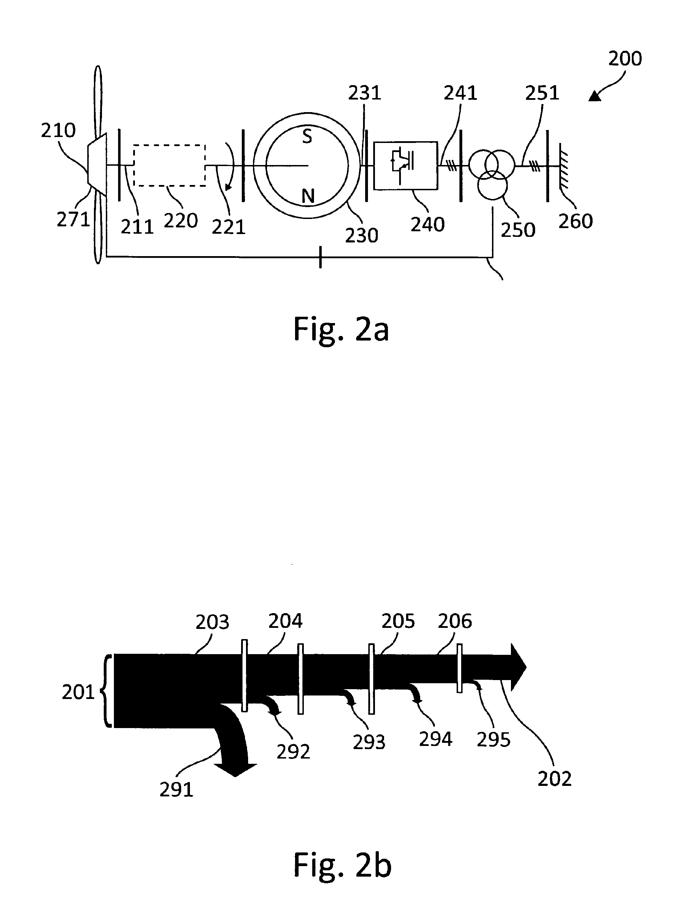

Figur 2a zeigt, insgesamt mit 200 bezeichnet, eine Windenergieanlage mit einem permanent erregten Synchrongenerator 230 in stark vereinfachter, schematischer Darstellung. Die Windenergieanlage 100 weist einen Rotor 210 auf, der über eine Rotorwelle 211 drehfest mit einem Getriebe 220 gekoppelt ist. Das Getriebe weist eine Getriebewelle 221 auf, welche ein Drehmoment in den Generator 230 einleitet.

Der durch den Generator 230 erzeugte Strom, beispielsweise ein dreiphasiger Wechselstrom, wird über eine Generatorleitung 231 einem, ebenfalls stark vereinfacht dargestellten, Umrichter 240 zugeführt. Über weitere Leitungen 241, 251 wird der Strom dann in einen Transformator 250 und schließlich in ein Netz 260 eingespeist. Die Regelung der Leistung der Windenergieanlage erfolgt unter anderem mittels einer auf einen Pitchregler 271 des Rotors 210 und/ oder eine Windrichtungsachsführung (Azimut) (hier nicht dargestellt) einwirkenden Ansteuerung 270.

Figur 2b zeigt den Leistungsfluss in einer Windenergieanlage gemäß Figur 2a in schematischer Darstellung. Der Windenergieanlage steht dabei zunächst eine Windleistung 201 zur Verfügung. Die letztlich ins Netz eingespeiste Leistung ist mit 202 angegeben. Aufgrund einer Rotorverlustleistung 291 des Rotors 210 von 40 - 50% der Windleistung 201 steht am Eingang des Getriebes 220 nur noch eine verbleibende mechanische Leistung 203 von 50 -60% zur Verfügung. Die Getriebeverluste 292 im Getriebe 220 belaufen sich typischerweise auf 2 - 6%, die mechanische Restleistung 204 ergibt sich entsprechend. Die Generatorverluste 293 beziffern sich üblicherweise auf 2 - 10%, die vom Generator 230 ausgegebene elektrische Leistung 205 vermindert sich durch Verluste für den Pitchregler 271 des Rotors 210 und/oder die Windrichtungsachsführung um eine weitere Verlustleistung 294 von bis zu 4% auf eine Restleistung 206. Diese wird nochmals durch Verluste 295 des Umrichters 240 von 1 - 2% vermindert.

In den Figuren 2a und 2b wird ein Zwischenkreisspeicher nicht berücksichtigt.

Figur 3 zeigt, insgesamt mit 300 bezeichnet, einen Antriebstrang einer Windkraftanlage und ein entsprechendes Modell in schematischer Darstellung. Bereits in der Figur 2a dargestellte Komponenten sind mit gleichen Bezugszeichen wie dort angegeben. Im Gegensatz zu dem in der Figur 2a dargestellten Antriebsstrang ist hier zusätzlich ein Energiespeicher 245, beispielsweise in Form eines Speicherkondensators, vorgesehen, der über eine Leitung 246 an den Umrichter 240 angebunden ist. Des Weiteren ist eine Windrichtungsachsführung 272 dargestellt.

Die Ansteuerung der einzelnen Komponenten der Windenergieanlage erfolgt mittels einer Anlagensteuerung 310 über Ansteuerleitungen 311 - 314. Die Anlagensteuerung 310 arbeitet nach Maßgabe eines Modells 320, das in den Strukturbereichen A und B, die langsamen und schnellen Systemkomponenten entsprechen, eine Systemmodellierung vornimmt.

Das Modell 320 hat über eine Wirklinie 331 Zugriff auf einen Datenspeicher 330, beispielsweise in Form von Flashspeicher, in der mathematische Zusammenhänge, Kennfelder oder entsprechende Parameter hinterlegt und/oder ablegbar sind. Die Betriebsgrenzen sind - in Wechselwirkung mit dem Datenspeicher 330 und dem Modell 320 - in einem Block 340 abgelegt.

Ein Zustandsüberwachungssystem 350 mit einem zugeordneten Messsystem ist vorgesehen, das über entsprechende Kanäle 351, die nur teilweise bezeichnet sind, Zustandswerte von Systemkomponenten des Antriebsstrangs abrufen kann. Die durch das Zustandsüberwachungssystem 350 ermittelten und gegebenenfalls entsprechend aufbereiteten Werte gehen über eine Wirklinie bzw. Leitung 352 in das Modell 320 ein.

Wie zuvor erwähnt, wird die gesamte Windkraftanlage bzw. der Antriebsstrang in dem Modell 320 simuliert, wobei eine Aufteilung des Modells auf mindestens zwei Strukturbereiche mit unterschiedlichen dynamischen Eigenschaften - nämlich einen "schnellen" Bereich A und einen "langsamen" Bereich B - erfolgt.

Die Anlagensteuerung 310, das Modell 320, der Datenspeicher 330 sowie der Block 340 sind üblicherweise Bestandteile einer Zentraleinheit (nicht gezeigt).

In Figur 4 ist der Sachverhalt genauer veranschaulicht. Diese zeigt, insgesamt mit 400 bezeichnet, die Aufteilung einer Windkraftanlage in zwei Teilsysteme A und B mit unterschiedlichem dynamischen Verhalten, deren Energiefluss mit 410 angegeben ist. Das Teilsystem A umfasst dabei den hochdynamischen Systembereich mit Generator und Generatorregler, Transformator, Umrichter und Zwischenkreisspeicher, Teilsystem B den mechanischen Wind-/ Mechaniksystembereich mit geringerer Dynamik.

Die schematische Ansicht zeigt einen Berechnungsblock 440, der einen Optimierungsalgorithmus 441 ausgeführt. Weiterhin ist eine Anlagensteuerung 430 vorgesehen. Die Windenergieanlage wird durch Teilmodelle 421 - 425 beschrieben, welche beispielsweise ein Windmodell 421, eine aerodynamisches Modell 422, ein mechanisches Modell 423, ein Generator-/ Frequenzumrichtermodell 424 und ein Transformatorenmodell 425 umfassen.

Die Anlagensteuerung 430 liefert Vorgaben 431 - 435 für Anlagenkomponenten u. a. auf Grundlage der durch die Teilmodelle 421 - 425 gelieferten Werte 436, 437. Insbesondere handelt es sich bei den durch die Anlagensteuerung 430 gelieferten Vorgaben um einen Azimutwinkel 431 $\theta_{Azim}$, einen Blattwinkel 432 $\theta_{Blatt}$, eine Zwischenkreisspannung 433 $U_{DC}$, einen Generatorsteuerwinkel 434 $Y_{Rot}$, sowie um einen Generatorstrom 435 $I_{Gen}$. Aus dem mechanischen Modell 423 finden beispielsweise ein Verdrehungswinkel 436 $\Delta\Theta_{Welle}$, der Hauptwelle und eine Generatorwinkelgeschwindigkeit 437 $\omega_{Gen}$, Eingang.

Das Modell der der Figur 4 zugrunde liegenden Windenergieanlage weist zwei Energiespeicher 245, 247 auf, die über Leitungen 246, 248 angebunden sind, um einen elektrischen Energiefluss in beide Richtungen zu ermöglichen. Wie zuvor sind ein Datenspeicher 450 und eine Zustandsüberwachungseinrichtung 460 vorgesehen.

Wie zuvor sind die Anlagensteuerung 430, die Teilmodelle 421 - 425, der Berechnungsblock 440 sowie der Datenspeicher 450 Bestandteile der Zentraleinheit (nicht gezeigt).

In dem Modell werden einzelne Verlustleistungen 290 - 298 der Anlagenkomponenten bestimmt und zu einer Gesamtverlustleistung 299 zusammengefasst. Im Einzelnen sind mit 290 und 291 die sich aus dem Windmodell ergebenden Windverluste und die sich aus dem aerodynamischen Modell ergebenden Verluste am Rotorblatt (Reibungsund Verformungsverluste), $\Sigma\Delta P_{wind}$ und $\Sigma\Delta P_{Blatt}$, bezeichnet. Das Getriebe weist eine weitere anteilige Verlustleistung 292, $\Sigma\Delta P_{Getr}$, auf. Die Verlustleistung von Generator und Frequenzumrichter 293, 295, $\Sigma\Delta P_{Gen+Fu}$, sind ebenso wie in der Figur 2a bezeichnet. Eine Transformatorverlustleistung, $\Sigma\Delta P_{Traf}$, ist hier zusätzlich angegeben und mit 296 bezeichnet. Insgesamt ergibt sich die Verlustleistung 299, $\Sigma\Delta P_{WEA}$, der Gesamtanlage, aus den Teilverlustleistungen 290 - 298 zugeführt.

Der Berechnungsblock 440 führt Berechnungen auf Grundlage von Werten durch, die durch die Anlagensteuerung 430 bereitgestellt werden, sowie auf Grundlage weiterer Eingaben, darunter solcher aus Teilsystem B, und Werten bezüglich der Anlagenverlustleistung 299, $\Sigma\Delta P_{WEA}$. Darüber hinaus stehen der Zentraleinheit unter anderem die Netzwirkleistung 471, $P_{Net}$, die Blindleistung 472, $Q_{Net}$, und die Generatorwinkelgeschwindigkeit 437, $\omega_{Gen}$, zur Verfügung.

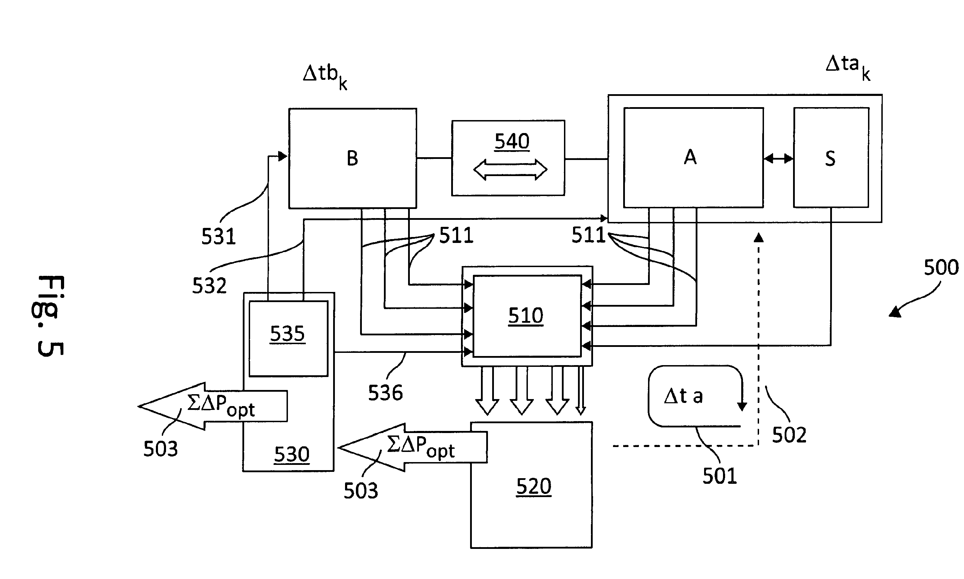

In Figur 5 ist eine Echtzeitsimulation einer Windkraftanlage gemäß einer besonders bevorzugten Ausführungsform der Erfindung in schematischer Darstellung gezeigt und insgesamt mit 500 bezeichnet. Alle in Figur 5 abgebildeten Elemente sind üblicherweise in der Zentraleinheit (Recheneinheit) der Windenergieanlage implementiert.

Es ist ein globales Verlustmodell 510 vorgesehen, das die Verluste auf Grundlage von Materialdaten und eines oder mehrerer Verlustberechnungsalgorithmen und/oder Kennfeldern berechnet. Das globale Verlustmodell 510 erhält dabei Daten 511 in Form der jeweils oben dargestellten Einzelverluste von den Teilmodellen A und B, die sich, wie oben erläutert, auf Komponentenbereiche bzw. Teilsysteme unterschiedlicher Dynamik beziehen. Das Verlustmodell 510 steht mit einem Optimierungsblock 520 in Verbindung, der im vorliegenden Beispiel den Zustandsvektor 503, der sich aus den das erste Teilmodell A kennzeichnenden Zustandsgrößen und den das zweite Teilmodell B kennzeichnenden Zustandsgrößen zusammensetzt, mit der geringsten Verlustleistung bestimmt und an einen Anlagensteuerblock 530 ausgibt. Für den Betrieb der Windenergieanlage wird von dem Anlagensteuerblock 530 iterativ zu Zeitpunkten $tb_k$ in zeitlichem Abstand $\Delta tb$ der jeweilige Soll-Zustandsvektor 503 zur Ansteuerung der Windenergieanlage in Echtzeit vorgegeben.

Wie durch Pfeil 501 veranschaulicht, findet währenddessen eine Anzahl von N Simulationsschritten mit zeitlicher Schrittweite $\Delta ta$ statt. Mit anderen Worten wird also im Rahmen eines "großen" Simulationsschritts mit Schrittweite $\Delta tb$ (welcher gleichzeitig einem Ansteuerschritt entspricht) betreffend die Gesamtanlage bzw. die "langsamen" Systemkomponenten eine Anzahl N "kleine" Simulationsschritte mit Schrittweite $\Delta ta$ betreffend die "schnellen" Systemkomponenten durchgeführt. Die "kleinen" Simulationsschritte liefern dabei, wie durch den gestrichelten Pfeil 502 veranschaulicht, jeweils iterativ angepasste Parameter des Strukturbereichs A. Es sei an dieser Stelle jedoch erwähnt, dass sich die simulierten Zustandsvektoren auch durch das zweite Teilmodell B kennzeichnende Zustandsgrößen (also insbesondere Pitch und Azimut) unterscheiden können. Der Soll-Zustandsvektor für den Zeitpunkt $tb_{k+1}$ bestimmt sich als derjenige der im Zeitraum von $tb_k$ bis $tb_{k+1}$ simulierten Zustandsvektoren mit der geringsten Verlustleistung.

Es ist möglich, im Zeitraum von $tb_k$ bis $tb_{k+1}$ auch einen Zwischen-Soll-Zustandsvektor vorzugeben, wenn sich während der Simulation ein lokales Optimum zeigt. Ein Zwischen-Soll-Zustandsvektor unterscheidet sich vom vorhergehenden Soll-Zustandsvektor nur durch das erste Teilmodell A kennzeichnende Zustandsgrößen (schnelle, elektrische Größen), da eine Veränderung der das zweite Teilmodell B kennzeichnende Zustandsgrößen aufgrund der niedrigen Eigenfrequenz nur zu Zeitpunkten $tb_k$ sinnvoll ist.

Der Anlagensteuerungsblock 530 verfügt ferner über ein Mess- und Zustandsüberwachungssystem 535, das Mess- und/oder Zustandswerte 536 an das globale Verlustmodell 510 und angepasste Zustandsgrößen 531, 532 an die Strukturbereiche A und B des Verlustmodells bereitstellt.

Durch eine geeignete Einrichtung 540 stehen die Strukturbereiche A und B des Verlustmodells in co-simulativem Datenaustausch. Ein Simulationsmodell S, das an den Strukturbereich A angebunden ist, und Einzelverluste des/der Energiespeicher beschreibt, stellt ebenfalls Daten an das globale Simulationsmodell bereit.

Figur 6 zeigt, insgesamt mit 600 bezeichnet, ein Betriebsverfahren für eine Windenergieanlage gemäß einer besonders bevorzugten Ausführungsform in schematischer Darstellung. Hierbei ist eine Datenstruktur für Zustandsvariablen und Verlustmodelle der Windenergieanlage schematisch dargestellt. Die zentrale Komponente ist ein Berechnungsblock 610. Strukturbereich B umfasst hierbei ein Windmodell 601, ein mechanisches Modell 602, ein Getriebemodell 603 und ein Modell der Pitchregelung 604. Strukturbereich A umfasst ein Generatormodell 605, ein Gleichrichtermodell 606, ein Invertermodell 607, ein Modell 608, das die jeweiligen Zuleitungen beschreibt, ein Transformatormodell 609, ein Netzmodell 610, ein Speichermodell 611 und ein Gleichstromwandlermodell 612.

Die Vektoren der Zustandsgrößen lassen sich dabei für den Strukturbereich A mit

$$[V\_Sys\_A] = [[V\_Gen], [V\_GI], [V\_Inv], [V\_L], [V\_Tr], [V\_Nz]]$$

und für den Strukturbereich B mit

$$[V\_Sys\_B] = [[V\_PC], [V\_Wind], [V\_Mech], [V\_Getr]]$$

angeben, wobei sich der Zustandsvektor [V_Sys_A] für den Strukturbereich A aus den Zustandsvektoren [V_GI] - Gleichrichter, [V_Inv] - Inverter, [V_L] - Zuleitungen, [V_Tr]-Transformator, [V_Nz] - Netz und der Zustandsvektor [V_Sys_B] für den Strukturbereich B aus den Zustandsgrößen [V_PC] - Pitchsystem, [V_Wind] - Windmodell, [V_Mech] - Mehrmassenmodell Antriebstrang, [V_Getr] - Getriebe zusammensetzt.

Ein Soll-Zustandsvektor setzt sich zusammen zu: [[V_Sys_A], [V_Sys_B]]

Beispielsweise gilt für den Zustandsvektor [V_Gen], der die Zustandsgrößen des Generators beschreibt:

$$[V\_Gen] = [\, I_d, \, I_q, \, \Psi_d, \, \Psi_q, \, \gamma, \, E_m, \, \omega_e \,].$$

Hierbei geben $I_d$ und $I_q$ die Achsenströme, $\Psi_d$, $\Psi_q$ die verketteten Achsenflüsse, Y den Steuerwinkel, $E_m$ die Polradspannung, und $\omega_e$ die elektrische Winkelfrequenz an.

Die Zusammenstellung der Zustandsvektoren kann dabei je nach Ausführung und Detaillierungsgrad unterschiedlich sein und hat keinen Einfluss auf das Prinzip der Erfindung.

Beide Vektoren werden bspw. aus numerischen Lösungen nichtlinearer differenzieller Zustandsgleichungen ermittelt:

$$\mathrm{d}/\mathrm{d}t\ [V\_Sys\_A] = K_A(t,\ T,\ [V\_Sys\_A])\ [V\_Sys\_A] + [E_A(t)]$$

$$\mathrm{d}/\mathrm{d}t\ [V\_Sys\_B] = K_B(t,\ T,\ [V\_Sys\_B])\ [V\_Sys\_B] + [E_B(t)]$$

Die Parametermatrizen $K_A(t,\ T)$ und $K_B(t,\ T)$ sind im Allgemeinen Funktionen von Zeit, Temperatur, Luftfeuchtigkeit und von Zustandsvektoren selbst. Sie können als multidimensionale Kennfelder im Speicher der Zentraleinheit hinterlegt werden und durch das Mess- und Zustandsüberwachungssystem der Anlage laufend modifiziert werden. Die Matrizen $[E_A(t)]$ und $[E_B(t)]$ beinhalten bzw. beschreiben Energiequellen und Kopplungen zwischen beiden Systemen.

Durch dieses Verfahren entsteht pro Iterationsschritt eine Menge von möglichen "Szenarien", also Verläufen des Vektors $\{[E_A(t)]\}$. Für jedes Szenario werden die Verluste des gesamten Systems entsprechend berechnet. Die Berechnung der Verluste selbst erfolgt auf bekannte Weise.

**Patentansprüche**

1. Verfahren zum verlustarmen Betrieb einer Windenergieanlage (200) mit jeweils variable Komponentenverlustleistungen (291 - 295) aufweisenden Anlagenkomponenten (210 -260), das die folgenden Schritte umfasst:

   a) Abbilden erster Anlagenkomponenten (230 - 270) der Windenergieanlage (200) in einem ersten Teilmodell (A) aus Komponentenmodellen (424, 425), die das Verhalten der ersten Anlagenkomponenten (230 - 270) bei Ansteuerung mit unterschiedlichen das erste Teilmodell (A) kennzeichnenden Zustandsgrößen (433-435) beschreiben,
   b) Abbilden zweiter Anlagenkomponenten (210 - 220) der Windenergieanlage (200) in einem zweiten Teilmodell (B) aus Komponentenmodellen (421 - 423), die das Verhalten der zweiten Anlagenkomponenten (210 - 220) bei Ansteuerung mit unterschiedlichen das zweite Teilmodell (B) kennzeichnende Zustandsgrößen (431, 432) beschreiben,
   c) Betreiben der Windenergieanlage (200) durch iteratives Vorgeben von Soll-Zustandsvektoren (503), die sich aus den das erste Teilmodell (A) kennzeichnenden Zustandsgrößen und den das zweite Teilmodell (B) kennzeichnenden Zustandsgrößen zusammensetzen, wobei sich die Frequenz der Iteration in Abhängigkeit von der Eigenfrequenz des zweiten Teilmodells (B) bestimmt,
   d) Auswählen des vorzugebenden Soll-Zustandsvektors (503) aus einer Anzahl von unterschiedlichen, während eines Iterationsschritts in einer Recheneinheit (310, 320, 330, 340; 430, 421-425, 440, 450; 500) simulierten Zustandsvektoren, wobei sich die simulierten Zustandsvektoren durch das erste Teilmodell (A) kennzeichnende Zustandsgrößen unterscheiden, wobei derjenige Soll-Zustandsvektor (503), der einer vorbestimmten Bedingung hinsichtlich der Verlustleistung oder des Wirkungsgrads der Windenergieanlage (200) genügt, insbesondere zur geringsten Verlustleistung oder zum höchsten Wirkungsgrad (200) führt, aus der Anzahl von simulierten Zustandsvektoren ausgewählt wird.

2. Verfahren nach Anspruch 1, wobei sich die simulierten Zustandsvektoren zusätzlich durch das zweite Teilmodell (B) kennzeichnende Zustandsgrößen unterscheiden.

3. Verfahren nach Anspruch 1 oder 2, wobei während eines Iterationsschritts ein simulierter Zustandsvektor, der sich vom vorherigen Soll-Zustandsvektor nur durch das erste Teilmodell (A) kennzeichnende Zustandsgrößen unterscheidet, als Zwischen-Soll-Zustandsvektor vorgegeben wird, wenn dies zu einer Reduzierung der Verlustleistung oder zu einer Erhöhung des Wirkungsgrads führt.

4. Verfahren nach einem der vorstehenden Ansprüche, wobei die ersten Anlagenkomponenten (230 - 270) der Windenergieanlage (200) Anlagenkomponenten (230 - 270) mit einer ersten Betriebsdynamik sind und die zweiten Anlagenkomponenten (210 - 220) der Windenergieanlage (200) Anlagenkomponenten (210 - 220) mit einer zweiten Betriebsdynamik sind, wobei die erste Betriebsdynamik höher als die erste Betriebsdynamik ist.

5. Verfahren nach Anspruch 4, wobei die Betriebsdynamiken der ersten und zweiten Anlagenkomponenten (210 - 260) Zeitkonstanten darstellen, die eine Änderung von Zustandsgrößen der Anlagenkomponenten (210 - 260) beschreiben.

6. Verfahren nach einem der vorstehenden Ansprüche, wobei das Simulieren das Verwenden von den jeweiligen Anlagenkomponenten (210 - 260) zugeordneten Messungen, mathematischen Modellen und/oder Kennfeldern umfasst.

7. Verfahren nach einem der vorstehenden Ansprüche, wobei das Simulieren das Verwenden zumindest eines Mehrziel-Optimierungsalgorithmus umfasst.

8. Verfahren nach einem der vorstehenden Ansprüche, wobei beim Simulieren wenigstens für einige der Anlagenkomponenten (210 - 260) Veränderungen von den Anlagenkomponenten (210 - 260) zugeordneten Komponentenparametern und/oder äußeren Bedingungen berücksichtigt werden.

9. Verfahren nach Anspruch 8, wobei zur Berücksichtigung der Veränderungen der den Anlagenkomponenten (210 - 260) zugeordneten Komponentenparametern und/oder der äußeren Bedingungen wenigstens ein Zustandsüberwachungssystem verwendet wird, das einen Verschleiß, Alterungserscheinungen, eine Temperatur und/oder eine Luftfeuchtigkeit überwacht.

10. Verfahren nach einem der vorstehenden Ansprüche, wobei beim Simulieren wenigstens für einige der Anlagenkomponenten (210 - 260) Betriebsgrenzen berücksichtigt werden.

11. Verfahren nach einem der vorstehenden Ansprüche, wobei die Anlagenkomponenten (210 - 260) zumindest einen Rotor (210), ein Getriebe (220), einen Generator (230), einen Umrichter (240) und einen Transformator (250) umfassen.

12. Steuerungs- und/oder Regelungssystem zum Betrieb einer Windenergieanlage (200) mit einer Recheneinheit (310, 320, 330, 340; 430, 421 - 425, 440, 450), die, insbesondere programmtechnisch, zur Durchführung eines Verfahrens gemäß einem der vorstehenden Ansprüche eingerichtet ist.

Fig. 1

**Fig. 2a**

**Fig. 2b**

Fig. 3

Fig. 4

Fig. 5

Fig. 6